# EUROPEAN PATENT APPLICATION

(11) **EP 2 471 628 A1**
(43) Date of publication of application: **04.07.2012**
(21) Application number: 09850259.4
(22) Date of filing: 09.10.2009
(51) Int. Cl.: B23K 37/04

(54) **WORK POSITIONING APPARATUS, METHOD OF POSITIONING WORKS AND WORK POSITIONING APPARATUS FOR BUTT WELDING**

(71) Applicant: IHI Corporation, Tokyo 135-8710 (JP)
(72) Inventor: MAENO, Jun, Tokyo 135-8710 (JP); NISHIMI, Akihiro, Tokyo 135-8710 (JP); IIMURA, Kenji, Tokyo 135-8710 (JP)
(74) Representative: Epping - Hermann - Fischer
(86) International application number: PCT/JP2009/067655
(87) International publication number: WO 2011/042988

(57) **Abstract**

There are provided a support member (86) having a sucking section (88) that sucks workpiece (A); an operating member (50) that supports the support member so that the support member is pivotable around an axis perpendicular to a plate surface of the workpiece and can displace the support member in a direction parallel to the plate surface of the workpiece and perpendicular to the edge of the workpiece; and a controller (48) that displaces the workpiece by activating the operating member so that the edge of the workpiece comes into contact with the stopper due to pressing force.

## Description

### Technical Field

The present invention relates to a workpiece positioning device and method, and a workpiece positioning device for butt welding, and more specifically, to a workpiece positioning device and method suitable for use prior to butt welding of thin sheets (workpiece).

### Background Art

In the case of butt welding of plate-like workpieces, improper butting of the workpieces partially creates a weak welding area. The workpieces therefore need to be properly butted to each other in a stage prior to the butt welding. A generally-known method uses a pusher to press workpieces from behind towards a stopper (including the case when one of the workpieces, which is fixed in a predetermined position, serves as a stopper) and thus carries out accurate positioning of the workpieces. This method has not many problems if the workpieces are substantially rectangular in shape. On the other hand, if the edges to be butted and the opposite edges in the workpieces extend slantwise relative to a pressing direction or if they curve, pressing the opposite edges with the pusher causes the problem that a component force acts upon a pressing point, which leads to unsuccessful pressing.

To solve this problem, the workpiece positioning device disclosed in Patent Document 1 is provided with an actuator-driven reciprocating member under a receiving board on which a workpiece is placed. A suction device is supported by the reciprocating member so as to be movable in a vertical direction and also tiltable. The suction device sucks the lower face of the workpiece placed on the receiving board. The reciprocating member is displaced by the actuator and made to press the workpiece towards a stopper. According to a positioning device like this one, even if the opposite edges of the workpieces extend at a slant or if they curve, the pressing can be carried out by sucking the lower face of the workpiece by using the suction device.

### Prior Art

### Patent Document

Patent Document 1: Japanese Unexamined Patent Publication (Kokai) No. 8-206881

### Disclosure of the Invention

### Problem to be Solved by the Invention

When the workpiece edge to be brought into contact with the stopper is formed in one side of the entire width of the workpiece, if the suction device that sucks the workpiece is shifted, the workpiece may fall at either one of corners of the butted edge thereof due to the one-sided formation.

The present invention has been made to solve the above problem. It is an object of the invention to provide a workpiece positioning device and method and a workpiece positioning device for butt welding, which are capable of accurately positioning a workpiece in relation to a stopper even if the workpiece has a unique shape.

### Means for Solving the Problem

To achieve the above object, according to claim 1, there is provided a workpiece positioning device that positions a plate-like workpiece, the workpiece positioning device comprising a board unit for fixing the workpiece and a delivery unit for delivering the workpiece towards the board unit, **characterized in that** the board unit includes a receiving board on which the workpiece is placed, and a stopper that is provided to the receiving board and comes into contact with a butt surface that is one end face of the workpiece; the delivery unit includes a sucking section that sucks the workpiece, a support member having the sucking section, a pivot shaft that acts as a center of pivoting motion of the support member and is perpendicular to a plate surface of the workpiece, an operating member that is parallel to the plate surface of the workpiece and is movable in a direction perpendicular to the butt surface, and a controller that controls the movement of the operating member and the pivoting motion of the support member; and the pivot shaft is located on a plane perpendicularly intersecting the butt surface at a point between both lateral edges of the butt surface in a planar view.

The workpiece positioning device of claim 2 according to claim 1 is **characterized in that** the support member extends from the pivot shaft in parallel to the plate surface of the workpiece, and the sucking section is provided at least to a tip end portion of the support member.

The workpiece positioning device of claim 3 according to claim 1 is **characterized in that** angle at which the support member pivots around the pivot shaft is limited to an angle range in which the butt surface is allowed to come into contact with the stopper.

The workpiece positioning device of claim 4 according to claim 1 is **characterized in that** the operating member has an air cylinder for pressing the workpiece against the stopper in the butt surface.

The workpiece positioning device of claim 5 according to claim 1 is **characterized in that** the board unit has a side stopper coming into contact with a lateral face of the workpiece other than the butt surface; and the operating member is movable in a direction parallel to the butt surface of the workpiece to bring the lateral face of the workpiece into contact with the side stopper.

According to claim 6, there is provided a workpiece positioning method using the positioning device claimed in claim 1, **characterized in that** the positioning device has a board unit for fixing a plate-like workpiece and a delivery unit for delivering the workpiece towards the board unit; the board unit includes a receiving board on which the workpiece is placed, and a stopper that is provided to the receiving board and comes into contact with the butt surface of the workpiece; the delivery unit includes a sucking section that sucks the workpiece, a support member having the sucking section, a pivot shaft that acts as the center of pivoting motion of the support member and is perpendicular to the plate surface of the workpiece, and an operating member that has the pivot shaft, is parallel to the plate surface of the workpiece, and is movable in the direction perpendicular to the butt surface of the workpiece; and the positioning method sucks the workpiece by the sucking section, moves the operating member to a position in which the pivot shaft intersects with a perpendicular line running through the butt surface, pivots the support member around the pivot shaft, and presses the workpiece against the stopper.

The workpiece positioning method of claim 7 according to claim 6 is **characterized in that** the board unit further has a side stopper coming into contact with a lateral face of the workpiece other than the butt surface; and the operating member is movable in a direction parallel to the butt surface of the workpiece to bring the lateral face of the workpiece into contact with the side stopper.

The workpiece positioning method of claim 8 according to claim 7 is **characterized in that** the support member has at least two sucking sections, and sucks the workpiece by using the two sucking sections in opposite positions across a gravity point position of the workpiece in a planer view.

According to claim 9, there is provided a workpiece positioning device for positioning a plate-like workpiece to be butt-welded, comprising a board unit for fixing the workpiece and a delivery unit for delivering the workpiece towards the board unit, **characterized in that** the board unit includes the receiving board and the stopper which are claimed in claim 1, and a clamp member for pressing the workpiece against the receiving board from above the receiving board; the delivery unit includes the sucking section, the support member, the pivot shaft and the operating member which are claimed in claim 1; and the pivot shaft is located on a plane perpendicularly intersecting the butt surface at a point between both lateral edges of the butt surface in a planar view.

The workpiece positioning device of claim 10 according to claim 9 is **characterized in that** the board unit has a side stopper coming into contact with a lateral face of the workpiece other than the butt surface; and the operating member is movable in a direction parallel to the butt surface of the workpiece to bring the lateral face of the workpiece into contact with the side stopper.

The workpiece positioning device of claim 11 according to claim 9 is **characterized in that** the receiving board and the clamp member are movable in the direction perpendicular to the butt surface while the workpiece is pressed against the receiving board by the clamp member.

### Advantages of the Invention

According to the workpiece positioning device of claim 1, the operating member is activated by the controller, and thus, the edge of the workpiece comes into contact with the stopper by pressing force. This makes it possible to pivot the workpiece with the support member and bring the edge of the workpiece into tight contact with the stopper. For example, when the workpiece and the stopper have flat butt surfaces, even if the butt surface of the workpiece is slightly nonparallel to the stopper, the butt surface of the workpiece can be adjusted to be parallel to the stopper before the workpiece and the stopper come into contact, to thereby achieve the positioning of the workpiece. Furthermore, an axis line around which the support member pivots (or a point at which the pressing force acts upon the support member in a planar view) is parallel to the plate surface of the workpiece, and is located inside both ends of the butt surface of the workpiece as viewed in a direction perpendicular to the butt surface. In other words, the pivot shaft of the support member is located on a plane perpendicularly intersecting the butt surface at a point between both lateral edges of the butt surface in a planar view. For this reason, there is not created rotational moment around a corner of either one of the edges of the workpiece. This solves the problem that the workpiece falls due to pressure.

According to the workpiece positioning device of claim 2, the support member extends away from the pivot shaft (axis line) in a planar view, and is provided with the sucking section at least in the tip end portion thereof. It is therefore possible to separate the axis line that is a working point of the pressing force from a suction point of the suction member. Accordingly, even in the case of a workpiece having a unique shape, the axis line around which the support member pivots is positioned within an area of the edge of the workpiece as viewed in a direction parallel to the plate surface of the workpiece and perpendicular to the edge of the workpiece.

Consequently, even the workpiece in a unique shape can be positioned without causing a problem.

According to the workpiece positioning device of claim 3, the pivoting motion of the support member around the pivot shaft relative to the operating member is limited to a predetermined angle range. For that reason, when the workpiece is moved towards the stopper, the workpiece is prevented from being greatly changed in position even if rotational moment acts upon the workpiece. Moreover, since the pivot angle of the support member is limited to the angle range in which the butt surface can contact the stopper, there is no adverse effect on the positioning of the workpiece.

According to the workpiece positioning device of claim 4, an air cylinder is used to press the butt surface of the workpiece against the stopper. The air cylinder makes it easy to adjust the pressing force to proper strength.

According to the workpiece positioning device of claim 5, the workpiece can be moved by activating the operating member so that a lateral face of the workpiece other than the butt surface comes into contact with the side stopper while the butt surface of the workpiece is in contact with the stopper. It is then possible to carry out accurate positioning not only in the direction perpendicular to the butt surface of the workpiece but also in the direction parallel to the butt surface of the workpiece.

According to the workpiece positioning method of claim 6, the butt surface of the workpiece is brought into contact with the stopper by pressing force. As a result, the edge of the workpiece can be brought into tight contact with the stopper by pivoting the workpiece together with the support member. For example, when the workpiece and the stopper have flat butt surfaces, even if the butt surface of the workpiece is slightly nonparallel to the stopper, the butt surface of the workpiece can be made parallel to the stopper before the workpiece and the stopper contact each other, to thereby achieve the positioning of the workpiece. Furthermore, an axis line around which the support member pivots (or a point at which the pressing force acts upon the support member in a planar view) is parallel to the plate surface of the workpiece, and is located inside both ends of the butt surface as viewed in a direction perpendicular to the butt surface of the workpiece. In other words, the pivot shaft of the support member is located on a plane perpendicularly intersecting the butt surface at a point between both lateral edges of the butt surface in a planar view. For this reason, there is not created rotational moment around a corner of either one of edges of the workpiece. This solves the problem that the workpiece falls due to pressure.

According to the workpiece positioning device of claim 7, the workpiece can be moved by activating the operating member so that a lateral face of the workpiece other than the butt surface comes into contact with the side stopper while the butt surface of the workpiece is in contact with the stopper. It is then possible to carry out accurate positioning not only in the direction perpendicular to the butt surface of the workpiece but also in the direction parallel to the butted of the workpiece.

According to the positioning method of claim 8, the support member has at least two sucking sections, and the sucking sections are located on opposite sides across a gravity point position of the workpiece in a planer view. As the sucking sections sucks the workpiece in this state, rotational moment is prevented from being produced in the workpiece when the workpiece is moved by the support member.

According to a workpiece positioning device for butt welding claimed in claim 9, the operating member is activated by the controller, so that the butt surface of the workpiece is brought into contact with the stopper by pressing force. As a result, the edge of the workpiece can be brought into tight contact with the stopper by pivoting the workpiece together with the support member. For example, when the workpiece and the stopper have flat butt surfaces, even if the butt surface of the workpiece is slightly nonparallel to the stopper, the butt surface of the workpiece can be made parallel to the stopper before the workpiece and the stopper contact each other, to thereby achieve the positioning of the workpiece. The workpiece is accurately positioned in relation to the receiving board by pressing the workpiece against an upper face of the receiving board by using the clamp member. Furthermore, an axis line around which the support member pivots (or a point at which the pressing force acts upon the support member in a planar view) is parallel to the plate surface of the workpiece, and is located inside both ends of the butt surface as viewed in a direction perpendicular to the butt surface of the workpiece. In other words, the pivot shaft of the support member is located on a plane perpendicularly intersecting the butt surface at a point between both lateral edges of the butt surface in a planar view. For this reason, there is not created rotational moment around a corner of either one of edges of the workpiece. This solves the problem that the workpiece falls due to pressure.

According to the workpiece positioning device for butt welding claimed in claim 10, the workpiece can be moved by activating the operating member so that a lateral face of the workpiece other than the butt surface comes into contact with the side stopper while the butt surface of the workpiece is in contact with the stopper. It is then possible to carry out accurate positioning not only in the direction perpendicular to the butt surface of the workpiece but also in the direction parallel to the butted of the workpiece.

According to the workpiece positioning device for butt welding claimed in claim 11, the workpiece that is accurately positioned on the receiving board is firmly fixed by the clamp member to be located between the clamp member and the receiving board. In this state, the stopper is moved to a rest position, and then the workpiece is moved to a regular weld position together with the receiving board. In this manner, the workpiece positioning for butt welding is completed.

### Brief Description of the Drawings

FIG. 1 is a plan view of a welding apparatus including a workpiece positioning device applied with the present invention;
FIG. 2 is a view taken in a direction of arrow II of FIG. 1;
FIG. 3 is an enlarged view of a part of FIG. 1;
FIG. 4 is a side view of a robot shown in FIG. 1;
FIG. 5 is an enlarged plan view showing a support member 86 and a third arm 66 of FIG. 4;
FIG. 6 is a side view of FIG. 5; and
FIG. 7 is a plan view showing a routine of workpiece positioning.

### Best Mode of Carrying out the Invention

One embodiment of the present invention will be described below with reference to the attached drawings.

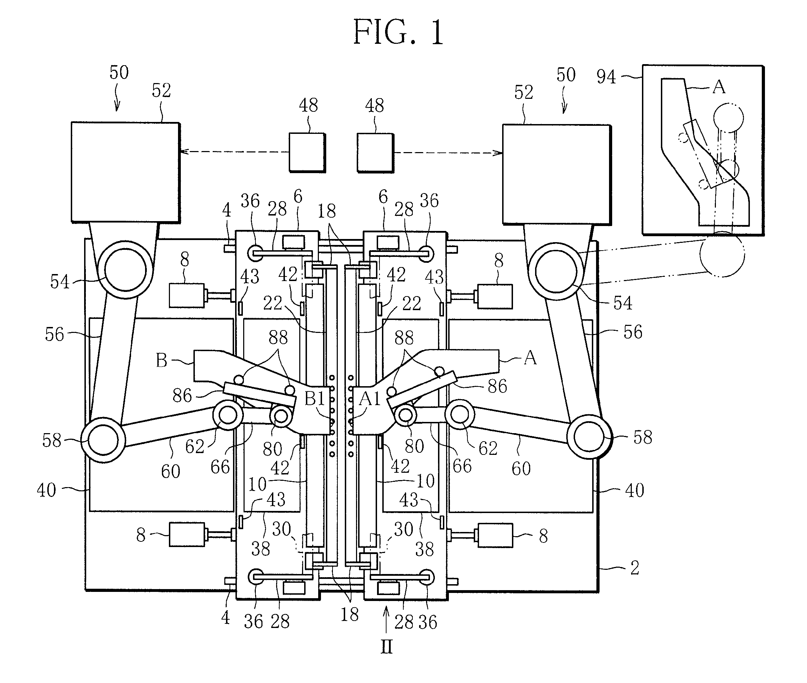

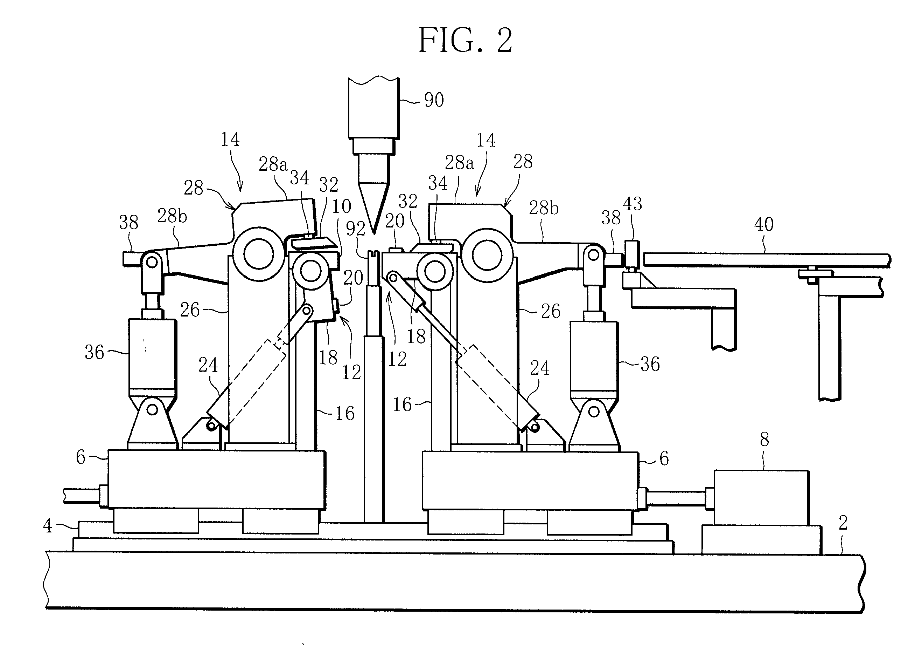

Referring to FIGS. 1 and 2, two movable boards 6 are movably supported by rails 4 installed on a bench 2 and extending in a horizontal direction (hereinafter, referred to as "longitudinal direction" for convenience). The movable boards 6 are moved to and stopped at arbitrary positions on the rails 4 by extendable cylinders 8 fixed to the bench 2. The movable boards 6 and members mounted on the movable boards 6 form a board unit. The movable boards 6 are provided with receiving boards 10 on which plate-like workpieces A and B are placed, stopper devices 12 for the workpieces A and B, and clamp devices 14 that clamp the workpieces A and B between the clamp devices 14 and the respective receiving boards 10. The workpieces A and B are to be butt-welded together in edges A1 and B1.

The receiving boards 10 extend in an up-down direction in the drawing (hereinafter, referred to as "width direction" for convenience). The receiving boards 10 are firmly fixed onto the movable boards 6.

The stopper devices 12 have respective arm-like pivoting members 18 that are rotatably supported by the support members 16 fixed to both ends extending in the width direction of the movable boards 6, and stopper support members 22 bridged between the pivoting members 18 and having a plurality of stoppers 20 arranged in a straight line. The stopper support members 22 are supported at proper places of central portions by pivoting members, not shown, disposed concentrically with the pivoting members 18 to prevent deformation of the central portions. Extendable cylinders 24 are set between the pivoting members 18 and the respective movable boards 6. The extendable cylinders 24 are used to move the stoppers 20 between a working position (right stoppers 20 in FIG. 2) and a rest position (left stoppers 20 in FIG. 2).

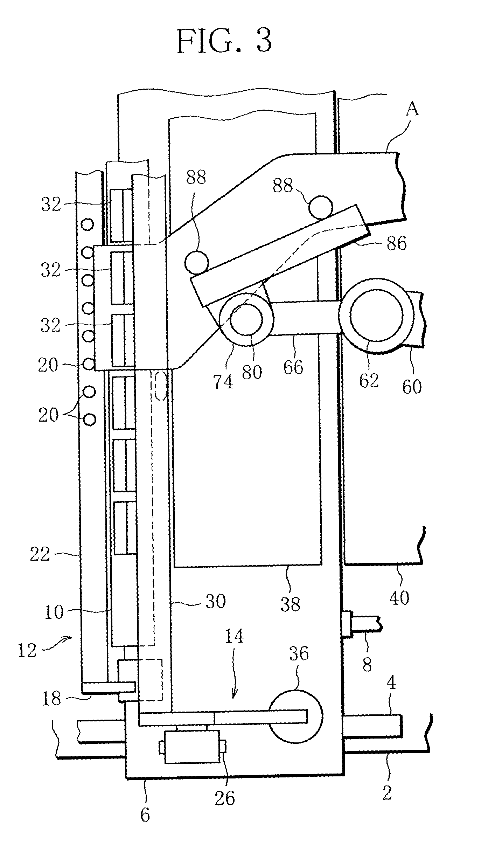

The clamp devices 14 are rotatably supported by support members 26 fixed on both the ends of the movable boards 6, which extend in the width direction of the movable boards 6. The clamp devices 14 have pivoting members 28 with two arms 28a and 28b and clamp support members 30 bridged between the arms 28a and 28b of the right and left pivoting members 28 and positioned above the receiving boards 10. As illustrated in FIGS. 2 and 3, the clamp support members 30 are provided with a plurality of pressing pads 32 arranged along a longitudinal direction of the clamp support members 30. Strong springs 34 are interposed between the pressing pads 32 and the clamp support members 30. Extendable cylinders 36 are set between the arms 28b and the movable boards 6. The extendable cylinders 36 are used to make the pressing pads 32 press the workpiece A against the receiving boards 10 (clamping position (right clamp device 14 in FIG. 2)). The extendable cylinders 36 are used to make the pressing pads 32 move to retrieve to space above the receiving boards 10 (non-clamping position (left clamp device 14 in FIG. 2)).

Receiving boards 38 and 40 having the same height as the receiving boards 10 are juxtaposed with the receiving boards 10. The receiving boards 38 and 40 are firmly fixed to the bench 2. Although the receiving boards 38 and 40 are shown in a plate-like shape in the drawing, it is possible to utilize those having a shape of lattice formed of a plurality of narrow members extending in the longitudinal direction in FIG. 1. Although not shown, guide members extending in the width direction are disposed between the receiving boards 10 and 38 and between the receiving boards 38 and 40. Two side stoppers 42 and two secondary side stoppers 43 are movably attached to each of the guide members. The side stoppers 42 are movable to arbitrary positions by using actuators, not shown.

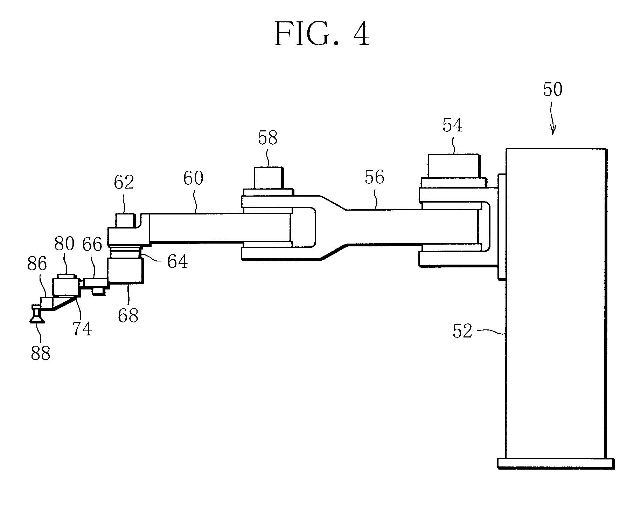

Operating members controlled by controllers 48, namely, horizontal polyarticular robots (delivery units) 50, are disposed on the side of the bench 2 correspondingly to the workpieces A and B. As is apparent from FIG. 4, each of the robots 50 has a first arm 56 pivotably fixed to a main body 50 through a first shaft 54 extending in a vertical direction, and a second arm 60 pivotably fixed to a tip end of the first arm 56 through a second shaft 56 extending in the vertical direction. A third arm 66 is fixed to a tip end of the second arm 60 so as to pivot around a third shaft 62 extending in the vertical direction and to be lifted and lowered by means of a lifting and lowering device 64.

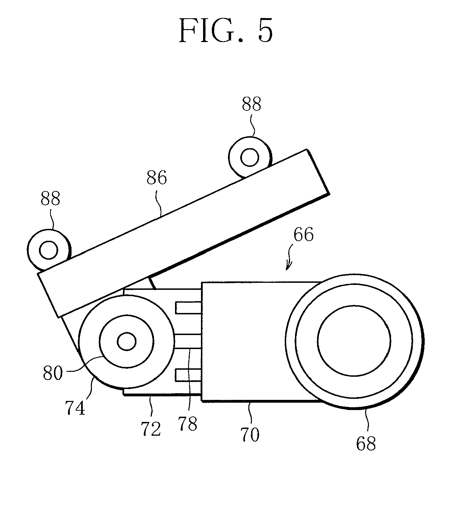

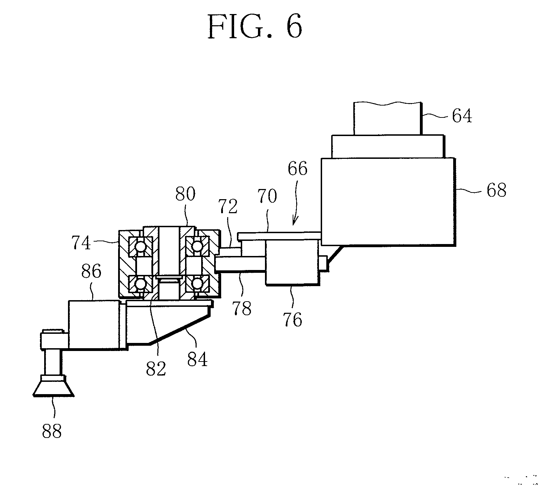

As is obvious from FIGS. 5 and 6, the third arm 66 has a base 68 attached to the second arm 60 to be pivotable and liftable/lowerable, a first arm portion 70 fastened to the base, and a second arm portion 72 engaged with the first arm portion 70 to be slidable in the longitudinal direction. A sleeve-like base body 74 is fastened to a tip end of the second arm portion 72. An air cylinder 76 fixed to the first arm 70 is engaged with the base body 74 at an operating shaft 78 thereof. Maximum sliding amount of the second arm portion 72 in relation to the first arm portion 70 is controlled by a stopper, not shown. At the same time, the air cylinder 76 is constantly applied with air pressure in a stretching direction thereof. The second arm portion 72 is maintained in a state sliding at the maximum against the first arm portion 70 unless external force is applied to the second arm portion 72.

A pivot shaft 80 is supported by the base body 74 through a bearing to be pivotable around a vertical axis. Although not shown, a key is protruding from a part of a periphery of the pivot shaft 80. The key is engaged with a part of the base body 74, and is limited in its pivot range relative to the base body 74 of the pivot shaft 80 to a predetermined angle (10 degrees, for example). Between the pivot shaft 80 and the base body 74, although not shown, there is provided an elastic member such as a spring that biases the pivot shaft 80 so that the pivot shaft 80 is located in an intermediate position of the pivot range relative to the base body 74.

A support member 86 is attached to a lower end portion of the shaft 80 through a shaft 82 and a bracket 84. The support member 86 extends away from the base body 74 in a planar view, and has vacuum sucking sections (hereinafter, referred to as suction members) 88 in a portion close to the base body 74 and a tip end portion. The suction members 88 may be electromagnetic suction members. The shaft 82 is detachably fixed at an arbitrary angle relative to the pivot shaft 80 in a pivoting direction.

As is clear from FIG. 2, a welding torch 90 is disposed in the middle of two movable boards 6. In this position, the welding torch 90 is capable of moving along a butt line of workpieces A and B facing each other. Under the butt line, a groove member 92 that opens upwards is disposed to extend along the butt line.

As is evident from FIG. 1, a stock table 94 on which the workpiece A as stock is placed is disposed near a robot 50. Naturally, the stock table 94 is disposed within an area where the support member 86 operated by the robot 50 reaches the workpiece A on the stock table 94. Although not shown in FIG. 1, a stock table similar to the stock table 94 is disposed to correspond to a robot 50 on the left side.

A butt-welding process will be described below, which butt-welds the workpieces A and B by means of a butt-welding device including the workpiece positioning device applied with the present invention described above.

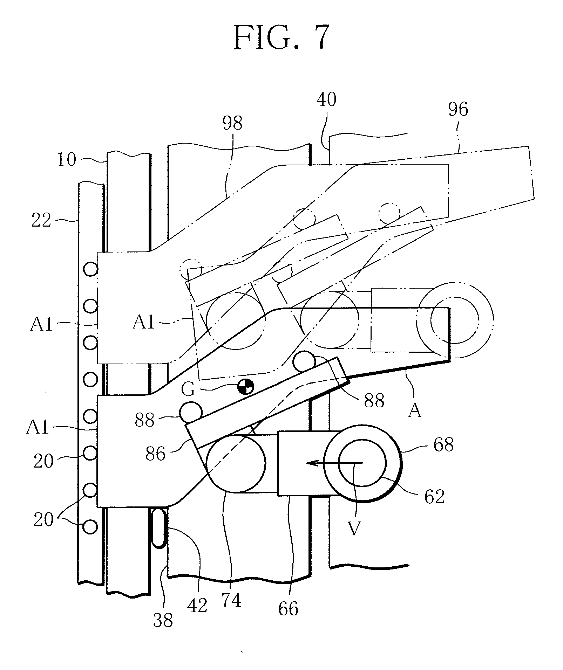

Referring to FIG. 1, each of controllers 48 controls the corresponding robot 50 in the following manner. First, as shown by chain double-dashed lines in FIG. 1, the arms 56, 60 and 66 are activated so that the support member 86 is located at a position corresponding to the workpiece A on the stock table 94. Secondly, the base body 74 is lowered together with the third arm 66 by the lifting and lowering device 64, and the workpiece A is sucked by the suction member 88. The suction member 88 is lifted together with the third arm 66 by the lifting and lowering device 64. The workpiece A is delivered onto the receiving boards 38 and 40, and placed on the receiving boards 38 and 40 by the lifting and lowering device 64. At this point of time, as shown by a chain double-dashed line 96 in FIG. 7, the workpiece A is placed so that an edge A1 to be butt-welded is substantially parallel to stoppers 20 in the working position. As shown by a chain double-dashed line 98 in FIG. 7, the arms 56, 60 and 66 are activated to bring the edge A1 of the workpiece A1 into contact with the stoppers 20. Furthermore, the workpiece A is pressed against the stoppers 20 so that the third arm 66 stretched at the maximum by the air cylinder is contracted slightly (for example, 10 mm to 20 mm). During this process, a region close to the edge A1 in the workpiece A is located on the receiving board 10. This way, as shown by the chain double-dashed line 98, the edge of the workpiece A comes into tight contact with the stoppers 20 arranged in a straight line in the width direction.

The arms 56, 60 and 66 are further operated to move the workpiece A in the width direction (downwards in FIG. 7) while the workpiece A is being pressed against the stoppers 20 so that the workpiece A comes into contact with a stopper 42 previously arranged in regular positions in the width direction (vertical direction in FIG. 7). As shown by a solid line in FIG. 7, the workpiece A comes into tight contact with the stoppers 20 in the longitudinal direction and into contact with the side stopper 42 in the width direction. The workpiece A is thus located in a regular position relative to the receiving board 10 on the movable board 6.

The secondary side stopper 43 is previously positioned in a position detached from the workpiece A across a small gap (for example, 5 mm) in a state where the workpiece A is in contact with the side stopper 42. This prevents the problem that, when the workpiece A is moved by the support member 86 at high speed from the position shown by the chain double-dashed line 98 to the position shown by the solid line in FIG. 7, the workpiece A may almost fall due to friction between the workpiece A and the stoppers 20 or the receiving board 10.

The pad 32 of the clamp device 14 is moved to the clamping position. In other words, the extendable cylinder 36 of the clamp device 14 is stretched to lower the clamp, and the workpiece A is pressed between the pad 32 of the clamp and the receiving board 10. The workpiece A is thus firmly fixed to the receiving board 10 in the regular position.

In this state, the expandable cylinder 24 of the stopper device 12 is contracted, and the stoppers 20 are shifted to the storage positions together with the stopper support members 22. The movable board 6 is forwarded by the expandable cylinder 8 being stretched while the workpiece A remains fixed by the clamp device 14 so that the edge A1 of the workpiece A comes to a predetermined position under the welding torch 90.

Since the device structure is symmetrical in layout, the workpiece B is also positioned in relation to the receiving board 10 by the left robot in FIG. 1, and forwarded with the left movable board 6 by the expandable cylinder 8 being stretched. An edge B1 of the workpiece B therefore comes to a predetermined position under the welding torch 90. This offers the advantage that the workpieces A and B can be butted together with high butting accuracy.

Characteristics, operation and advantages of the positioning device and process will be further described below.

First, the relationship between the edge A1 of the workpiece A and the center of pivoting motion of the support member 86 supporting the workpiece A will be explained. Referring to FIG. 7, the workpiece A is pressed by the robot 50 so that the end face A1 thereof comes into contact with the stoppers 20. The working point of the pressing force is the third shaft 62 that acts as the center of pivoting motion of the support member 86, namely, the center of pivoting motion of the third arm 66. Assuming that this pressing force is seen as vector, as shown by arrow V in FIG. 7, the pressing force acts parallel to a plate surface of the workpiece A and perpendicular to the edge A1 of the workpiece A. A sucking point at which the workpiece is sucked by the suction member 88 is selected so that the center of pivoting motion of the support member 86 which is the working point of the pressing force (namely, the center of the third shaft 62) is located within an are of the edge A1 of the workpiece A as viewed along the vector V.

Because of the above structure, when the workpiece A is pressed by the robot 50, rotational moment around a corner of either end of the edge A1 is not created in the workpiece A. It is therefore possible to solve the problem that the workpiece A falls due to pressure.

The relationship between the support member 88 and the sucking point of the workpiece A is determined so that the two suction members 88 are located opposite to each other across a gravity point of the workpiece A in a planar view. This makes it possible to reduce the wobbling of the workpiece A to the minimum when the workpiece A is delivered from the stock table 94. If the support member 86 makes parallel motion when the workpiece A is moved from the position shown by the chain double-dashed line 98 to the position shown by solid line A as shown in FIG. 7, it is possible to reduce the generation of rotational moment in the workpiece A.

A pivot range of the support member 86 in relation to the base body 74 is limited. This limitation prevents the workpiece A from widely wobbling when the workpiece A is delivered from the receiving board 10 or the stock table 94.

Furthermore, the shaft 82 fixed to the support member 86 can be detachably fixed at an arbitrary angle relative to the pivot shaft 80 in a pivoting direction. The longitudinal direction of the third arm 66 is virtually the same as the direction of the pressing force acting upon the workpiece A. If the angle of the shaft 82 relative to the pivot shaft 80 in the pivoting direction is changed, the angle between the direction in which the pressing force acts upon the workpiece A and the longitudinal direction of the support member 86 can be easily changed. There is the advantage that a workpiece having a different shape can be sucked so that the working point of the pressing force is within the area of the edge butted to the stoppers as viewed along the direction of the pressing force acting upon the workpiece. Especially, since the support member 86 extends away from the base body 74 in a planar view, and the suction member 88 is attached to the tip end portion of the support member 86, it is possible to detach the base body 74 that is the working point of the pressing force and the sucking point of the suction member 88 from each other. This makes the above-mentioned advantage more remarkable.

If support members 86 varied in size or shape are prepared near the robots 50 to deal with workpieces in different shapes, positioning can be quickly carried out by replacing the support member 86 with another support member to position a workpiece having a different shape.

The robots 50 activate the arms 56, 60 and 66, and the workpiece A on the stock table 94 is sucked by the suction member 88 and thus delivered onto the receiving boards 38 and 40. This eliminates the need for a special device for transporting the workpiece A onto the receiving board 10, 38 or 40, thereby reducing the cost of equipment.

The description of the embodiment according to the invention is finished here. The embodiment is not limited to the above-described one, and can be modified in various ways without deviating from the gist of the invention.

For example, in the above embodiment, the robot 50 delivers the workpiece A onto the receiving boards 38 and 40. Instead, it is also possible to use a separate special loader to deliver the workpiece A onto the receiving boards 38 and 40.

According to the embodiment, the direction of the pressing force acting upon the workpiece A and the longitudinal direction of the support member 86 can be easily changed by changing the angle of the shaft 82 relative to the pivot shaft 80 in the pivoting direction. This way, even if the workpiece has a different shape, it is possible to suck the workpiece so that the working point of the pressing force is within the area of the edge to be butted to the stoppers as viewed along the pressing force acting upon the workpiece. Instead, if the support member 86 is designed to be pivotable at an arbitrary angle relative to the third arm 66 by means of an actuator, it is similarly possible to deal with workpieces in different shapes.

Although the embodiment carries out the positioning of the workpiece A by bringing the workpiece A into contact with the stoppers 20, it is also possible, for example, to fix the other workpiece is previously fixed at a regular position in the case of butt-welding and use the edge of the other workpiece as a stopper.

The embodiment is applied to the butt-welding device. Needless to say, however, the positioning device of the present invention may be applied to other devices than butt-welding devices.

### Reference Marks

- 2: bench
- 6: movable board
- 10,: 38, 40 receiving board
- 14: clamp device
- 20: stopper
- 42: side stopper
- 50: robot
- 86: support member
- 88: suction member
- A, B: workpiece

## Claims

1. A workpiece positioning device that positions a plate-like workpiece, comprising:
a board unit for fixing the workpiece, and
a delivery unit for delivering the workpiece towards the board unit, **characterized in that**
the board unit includes
a receiving board on which the workpiece is placed, and
a stopper that is provided to the receiving board and comes into contact with a butt surface that is one end face of the workpiece,
the delivery unit includes
a sucking section that sucks the workpiece,
a support member having the sucking section,
a pivot shaft that acts as a center of pivoting motion of the support member and is perpendicular to a plate surface of the workpiece,
an operating member that is parallel to the plate surface of the workpiece and is movable in a direction perpendicular to the butt surface, and
a controller that controls the movement of the operating member and the pivoting motion of the support member; and
the pivot shaft is located on a plane perpendicularly intersecting the butt surface at a point between both lateral edges of the butt surface in a planar view.

2. The workpiece positioning device according to claim 1 **characterized in that** the support member extends from the pivot shaft in parallel to the plate surface of the workpiece, and the sucking section is provided at least to a tip end portion of the support member.

3. The workpiece positioning device according to claim 1 **characterized in that** angle at which the support member pivots around the pivot shaft is limited to an angle range in which the butt surface is allowed to come into contact with the stopper.

4. The workpiece positioning device according to claim 1 **characterized in that** the operating member has an air cylinder for pressing the workpiece against the stopper in the butt surface.

5. The workpiece positioning device according to claim 1 **characterized in that** the board unit has a side stopper coming into contact with a lateral face of the workpiece other than the butt surface; and
the operating member is movable in a direction parallel to the butt surface of the workpiece to bring the lateral face of the workpiece into contact with the side stopper.

6. A workpiece positioning method using the positioning device claimed in claim 1, **characterized in that**
the positioning device has
a board unit for fixing a plate-like workpiece and
a delivery unit for delivering the workpiece towards the board unit;
the board unit includes
a receiving board on which the workpiece is placed, and
a stopper that is provided to the receiving board and comes into contact with the butt surface of the workpiece;
the delivery unit includes
a sucking section that sucks the workpiece,
a support member having the sucking section,
a pivot shaft that acts as a center of pivoting motion of the support member and is perpendicular to a plate surface of the workpiece, and
an operating member that has the pivot shaft, is parallel to the plate surface of the workpiece, and is movable in the direction perpendicular to the butt surface of the workpiece; and
the positioning method
sucks the workpiece by the sucking section,
moves the operating member to a position in which the pivot shaft intersects with a perpendicular line running through the butt surface,
pivots the support member around the pivot shaft, and presses the workpiece against the stopper.

7. The workpiece positioning method according to claim 6 **characterized in that** the board unit further has a side stopper coming into contact with a lateral face of the workpiece other than the butt surface; and
after the workpiece is pressed against the stopper,
the operating member is moved in a direction parallel to the butt surface of the workpiece, and
the lateral face of the workpiece is brought into contact with the side stopper.

8. The workpiece positioning method according to claim 7 **characterized in that** the support member has at least two sucking sections, and when sucking the workpiece in the sucking sections
the support member sucks the workpiece by using the two sucking sections in opposite positions across a gravity point position of the workpiece in a planer view.

9. A workpiece positioning device for positioning a plate-like workpiece to be butt-welded, comprising
a board unit for fixing the workpiece, and
a delivery unit for delivering the workpiece towards the board unit, **characterized in that**
the board unit includes
the receiving board and the stopper which are claimed in claim 1, and a clamp member for pressing the workpiece against the receiving board from above the receiving board;
the delivery unit includes
the sucking section, the support member, the pivot shaft and the operating member which are claimed in claim 1; and
the pivot shaft is located on a plane perpendicularly intersecting the butt surface at a point between both lateral edges of the butt surface in a planar view.

10. The workpiece positioning device according to claim 9 **characterized in that**
the board unit has a side stopper coming into contact with a lateral face of the workpiece other than the butt surface; and
the operating member is movable in a direction parallel to the butt surface of the workpiece to bring the lateral face of the workpiece into contact with the side stopper.

11. The workpiece positioning device according to claim 9 **characterized in that** the receiving board and the clamp member are movable in the direction perpendicular to the butt surface while the workpiece is pressed against the receiving board by the clamp member.
